# EUROPÄISCHE PATENTSCHRIFT

(11) **EP 1 088 904 B1**
(45) Veröffentlichungstag und Bekanntmachung des Hinweises auf die Patenterteilung: **08.12.2004**
(21) Anmeldenummer: 00120288.6
(22) Anmeldetag: 28.09.2000
(51) Int. Cl.: C22B 7/02, C21B 13/08, C22B 13/00, C22B 19/28

(54) **Verfahren zur Verwertung von Eisen, Zink und Blei enthaltenden Sekundärrohstoffen wie Stahlwerksstäuben**
Method of treating iron, zinc and lead bearing secondary materials such as steelmaking furnace dusts
Procédé de valorisation de matériaux secondaires contenant du fer, du zinc et du plomb tels que les poussières issues de fours sidérurgiques

(30) Priorität: 28.09.1999 DE 19946430
(43) Veröffentlichungstag der Anmeldung: 04.04.2001
(73) Patentinhaber: B.U.S. Zinkrecycling Freiberg GmbH & Co. KG, 09599 Freiberg (DE)
(72) Erfinder: Saage, Eberhard, 09599 Freiberg/OT Zug (DE); Hasche, Uwe, 09600 Weissenborn (DE); Dittrich, Wolfgang, 09618 Brand-Erbisdorf (DE); Langbein, Diethart, 09599 Freiberg (DE)
(74) Vertreter: Reinhard - Skuhra - Weise & Partner

(56) Entgegenhaltungen:
- EP-A- 0 654 538
- WO-A-98/04755
- FR-A- 1 594 084
- US-A- 4 396 424
- DATABASE WPI Section Ch, Week 198235 Derwent Publications Ltd., London, GB; Class M25, AN 1982-74110E XP002158447 & SU 876 761 A (NON FERR METAL ORE), 30. Oktober 1981 (1981-10-30)

## Beschreibung

### Gebiet der Erfindung

Die Erfindung betrifft ein Verfahren zur Verwertung von Eisen, Zink und Blei enthaltenden Sekundärrohstoffen, vorzugsweise Stahlwerkstäuben, in einer üblicherweise für den Wälzprozeß ausgestatteten Drehrohrofenanlage mit basisch eingestellter Wälzschlacke.

### Hintergrund der Erfindung

Bekannt ist, daß beim Wälzverfahren Zink und Blei enthaltende Stoffe mit Koksgrus (Kohlenstoffträger) vermischt werden und einem im Gegenstrom geschalteten Drehrohrofen aufgegeben werden. Das Material bewegt sich auf Grund von Neigung der Ofenachse und der Drehung des Ofens zum tieferen Ende des Ofens. Die gegenströmende Luft, die vielfach von einem Brenner aufgewärmt wird, oxidiert die aus der Beschickung entstehenden Gase, wodurch sich die Temperatur der Gase erhöht und dadurch eine Erwärmung des Ofenraumes und der Beschickung eintritt.

Beim Durchlauf durch den Ofen erfährt diese Beschickung eine Veränderung der Zusammensetzung derart, daß zunächst Kohlenstoff mit reduzierbaren Eisenoxiden unter Bildung von metallischem Eisen reagiert, entstehendes Kohlenoxid sowie fester Kohlenstoff dann mit Zinkoxid zu Zinkmetall reagiert, Blei und seine Verbindungen entsprechend reagieren und schließlich alles, entsprechend seiner Dampfdruckverhältnisse, verdampft. Das metallische Eisen wird durch überschüssigen Kohlenstoff aufgekohlt. Die festen Rückstände, genannt Wälzschlacke, enthalten überschüssigen Koks, aufgekohltes metallisches Eisen und einen Rest aus schlackebildenden Oxiden, auch Zink in geringen Mengen. Die Rauchgase verlieren auf dem Weg durch den Ofen den Gehalt an freiem Sauerstoff. Bei einem idealen Wälzbetrieb enthalten die Rauchgase am Gasaustritt weder O₂ noch CO.

Bei den bisher bekannten basischen Prozeßführungen sind die Wälzschlacken durch Eluatwerte und bauphysikalische Eigenschaften gekennzeichnet, die ihre Verwertung auf wenige Einsatzgebiete, wie zum Beispiel den Deponiebau, beschränken.

Weitere Nachteile der bisher bekannten basisch geführten Wälzprozesse sind:
1. Hoher Energieverbrauch durch hohen Koksaufgang.
2. Höherer Energieverbrauch durch häufiges Zufeuern mit einem hochwertigen Brennstoff.
3. Energieverschwendung durch 5 -10 % Restkoks und metallisches Eisen (> 90 % v. V. (vom Vorlauf)) in der Wälzschlacke.
4. Auftreten von eisenhaltigen Ansätzen an den Ofenwänden oder von Eisenkugeln in der Nähe des Austragsbereiches, begünstigt durch hohe Kohlenstoffgehalte im Eisenschwamm.

Zur Vermeidung dieser Nachteile werden in der Literatur Vorschläge gemacht, durch Aufblasen von Heißluft am Schlackenaustritt eine Oxidation der Wälzschlacke zu erreichen.

Bei dem Verfahren gemäß US 366 522 wird im Austragsbereich eines Drehrohrofens Heißluft aufgeblasen, die in einer gesonderten Rekuperatoranlage auf 700 °C bis 750 °C erhitzt wird, ohne daß der Anspruch erhoben wird, daß die dazu erforderliche Energie aus dem Prozeß entnommen wird. Die Temperatur im Aufblasbereich soll bis 2000 °C ansteigen können, was auch aus der Vorlauftemperatur der Reaktionspartner folgt. Die Wälzschlacke wird zumindest teilweise schmelzen, sie soll in granulierter Form anfallen. Das Verfahren ist vorzugsweise für sulfidische Erze gedacht.

Mit den Grundzügen dieses Verfahrens nahezu identisch ist das bekannte Wälzverfahren gemäß EP-0654538. Auch hier wird in dem Austragsbereich des Drehrohrofens Heißluft von in diesem Fall 500 ― 1000 °C eingeblasen, um die oxidierbaren Bestandteile der Wälzschlacke in die Energienutzung einzubeziehen. Durch die Verbrennung von Überschußkohlenstoff und metallischem Eisen steigt die Temperatur der Wälzschlacke auf 1200 °C bis 1500 °C an, sie soll allerdings krümelig bleiben und nicht geschmolzen ausfließen. Deshalb ist das Verfahren nur bei basischer Betriebsweise anwendbar. Die Luftmenge wird zur Begrenzung des Temperaturverlaufes im Ofengasraum so bemessen, daß das Rauchgas am Ofenfuchs (Eintragsseite der Beschickung) noch CO und Zn-Dampf neben anderen Komponenten enthält, also unterstöchiometrisch in bezug auf die Verbrennung ist. Deshalb ist eine geordnete Nachverbrennung erforderlich. Aufwendig ist bei dem Verfahren die Heißluftbereitung gelöst. Die Abgase der Nachverbrennung dienen der Vorwärmung der Verbrennungsluft, wozu ein Spezialrekuperator erforderlich ist, der unter ungünstigen Bedingungen arbeitet (Staub, Chloride Blei). Technische Lösungen für einen derartigen Rekuperatur sind nicht bekannt.

Die Druckschrift US-A-4,396,424 beschreibt ein Wälzverfahren gemäß dem Oberbegriff des Anspruchs 1. Der als Brennstoff oder Hitzequelle eingesetzter Kohlenstoff entspricht hierbei der gesamten erforderlichen Menge zur Reduktion von Fe₂O₃ zu FeO sowie dem Anteil zur Reduktion von Zinkoxid, Bleioxid und anderen Metalloxiden. Es wird keinerlei unterstöchiometrische Beschickung mit Kohlenstoff in Bezug auf alle Kohlenstoffe verbrauchenden Reaktionen durchgeführt. Es wird ein Ofen verwendet, in dem eine reduzierende Atmosphäre an der Eintragsseite und eine oxidierende Atmosphäre an der Austragsseite herrscht. Die Zinkund Bleiverbindungen werden in der reduzierenden Atmosphäre zu den Metallen reduziert und die Metalle werden verflüchtigt. Allerdings ist in dieser Atmosphäre kein Sauerstoff mehr vorhanden, so dass in der Gasphase keine Oxidation mehr stattfinden kann.

Die Druckschrift WO-A-98/04755 beschreibt ein Verfahren zur Herstellung eines zinkaufweisenden Materials mittels eines Wälzverfahrens, wobei eine Wälzschlacke an einem Ofenausgang mit einem Kohlenstoff mit einem Gehalt von 20% erzeugt wird.

### Zusammenfassung der Erfindung

Der Erfindung liegt die Aufgabe zugrunde, ein Verfahren bereitzustellen, mit dem ein Wälzprozeß mit basisch eingestellter Wälzschlacke in normal ausgestatteten Wälzanlagen mit vertretbarem technischen Aufwand durchführbar ist. Das Verfahren soll mit einer geringeren als bisher üblichen Temperatur in der Wälzschlacke und ohne Nachverbrennung von Abgas mit Luft außerhalb des Wälzofens arbeiten. Es sollen außerdem die Energiebilanz des Wälzprozesses verbessert und zum anderen die Durchsatzleistung des verwendeten Drehrohrofens erhöht werden. Weiterhin soll die Qualität der Schlacke verbessert werden, damit diese vielseitiger verwertbar wird.

Erfindungsgemäß werden diese Aufgaben durch ein Verfahren nach Anspruch 1 gelöst. Bevorzugte Ausgestaltungen ergeben sich aus den Unteransprüchen.

Bei dem erfindungsgemäßen Verfahren werden Eisen, Zink und Blei enthaltende Sekundärrohstoffe, vorzugsweise Stahlwerkstäube, in einem Drehrohrofen mit Gegenstrombetriebsweise von Beschickung und Gasatmosphäre sowie basische eingestellter Wälzschlacke derart verarbeitet, daß die Rohstoffe mit einem reaktionsfähigen, feinkörnigen Kohlenstoffträger gemischt und/oder agglomeriert werden, wobei der Mengenanteil des Kohlenstoffes im Vergleich mit allen kohlenstoffverbrauchenden Reaktionen in der Beschickung stark unterstöchiometrisch vorhanden ist, daß ein weiterer Anteil an grobkörnigen Kohlenstoffträgern zwischen den Agglomeraten verteilt wird, daß der Gesamtanteil des Kohlenstoffes < 80 % der Menge beträgt, die alle kohlenstoffverbrauchenden Reaktionen in der Beschickung bei einer Wälztemperatur von < 1150 °C benötigen. Es ist bevorzugt, daß der Kohlenstoffanteil so bemessen ist, daß die Wälzschlacke auch ohne Nachoxidation keinen freien Kohlenstoff enthält (< 1 %), daß dem Ofen eine Gesamtluftmenge zugeführt wird, die in bezug auf alle oxidierbaren Gasbestandteile stöchiometrisch bzw. überstöchiometrisch ist, also ohne besondere kontrollierte Nachverbrennung auskommt, daß die Wälzschlacke in Ofenaustragsnähe nach dem Erreichen eines stabilen Ofengangs mit kalter Luft in einer Menge beaufschlagt wird, die den Anteil an metallischem Eisen auf weniger als 20 %, vorzugsweise < 10 % senkt und daß eine hohe Basizität der Wälzschlacke auch durch Zusatz von kalk- und magnesiumhaltigen Abfällen, wie Gipsfällschlamm mit hohem Magnesiumanteil von MgO ≥0,1 % CaO, eingestellt wird.

Die feinkörnigen Kohlenstoffträger haben erfindungsgemäß einen Durchmesser von ungefähr 0 - 6 mm, bevorzugt 0 - 4 mm und am bevorzugtesten < 2 mm. Die grobkörnigen Kohlenstoffträger haben erfindungsgemäß einen Durchmesser von ungefähr 0 - 16 mm, bevorzugt 0 - 12 mm und am bevorzugtesten < 10 mm.

Vorteilhaft an dem Verfahren ist, daß es völlig ausreichend ist, einen zusätzlichen Wärmebedarf am Ofenaustrag durch gezieltes Einleiten von kalter Luft in einer Menge von 30 - 40 % der Gesamtluft abzudecken. Die Luft bewirkt die Oxidation des metallischen Eisens und die damit verbundene Wärmeentwicklung. Die Temperatur der Wälzschlacke kann durch Regelung der Luftmenge auf eine Temperatur von < 1150 °C eingestellt werden. Die eingesaugte Luftmenge wird mit dem Ofenzug in bekannter Weise geregelt. Sie ist so zu bemessen, daß das Rauchgas am Ofenfuchs 0,5 - 2 % O₂ enthält.

Folglich erhält man ein Ofenregime, bei dem in der Feststoffschicht, also der Ofenbeschickung, der Mengenanteil des Kohlenstoffes unterstöchiometrisch in bezug auf den Bedarf an Kohlenstoff für alle kohlenstoffverbrauchenden Reaktionen ist, aber im Gasraum eine vollständige Verbrennung aller Bestandteile erlaubt und deshalb stöchiometrisch bzw. überstöchiometrisch in bezug auf die Verbrennung mit freiem O₂ in dem Rauchgas ist.

Dieses Prinzip wird vorteilhaft ausgestaltet durch die Verwendung eines, auch geringe Mengen an flüchtigen Stoffen enthaltenden, reaktionsfähigen und feinkörnigen Kohlenstoffträgers, der mit den feinkörnigen Rohstoffen und Zuschlägen gemischt und /oder agglomeriert dem Ofen aufgegeben wird.

Dieses Prinzip wird weiterhin vorteilhaft ausgestaltet dadurch, daß als basische Zuschlagstoffe auch Abfallgipse verwendet werden können, die einen weitgehend störungsfreien Ofengang erlauben. Dieser wird weiterhin verbessert durch den geringen Kohlenstoffgehalt des gebildeten metallischen Eisens und den dadurch bewirkten höheren Schmelzpunkt desselben.

Dieses Prinzip erlaubt bei der beschriebenen Betriebsweise einen Normalbetrieb auch bei kleinen Öfen weitgehend ohne Zusatzheizung.

Technisch realisiert wird das durch eine sorgfältige Dosierung und Mischung der Komponenten und dem Einsatz einer Agglomerieranlage. Weiterhin wird eine Lufteinleiteinrichtung benötigt mit Gebläse, Meß- und Steuereinrichtungen und einer verfahrbaren Blaslanze. Die entstehenden Wälzschlacken sind in Bereichen des Deponiebaues oder in Asphalttragschichten verwendbar. Sie sind oberflächlich dicht gesintert, frei von Kohlenstoff (< 1 %) und enthalten nur noch geringe Mengen an metallischem Eisen. Ihre Eluatwerte entsprechen den gesetzlichen Bestimmungen.

Die krümelige Wälzschlacke wird nach dem Austritt aus dem Ofen in einem Wasserstrahl granuliert oder abgeschreckt.

Bei dem erfindungsgemäßen Verfahren werden durch die Verringerung des Anteils an Kohlenstoffträgern sowie durch die Nutzung des energetischen Potentials des metallischen Eisens am Ofenaustrag die Energiebielanz des Wälzofens und auch die Durchsatzleistung des verwendeten Drehrohrofens erhöht.

### Ausführungsbeispiel

Zink- und bleihaltige Stahlwerkstäube werden mit Petrolkoks einer Korngröße < 2 mm, feinkörnigen CaSO₄-haltigen Zuschlagstoffen und Wasser pelletiert. Der Petrolkokssatz wird so eingestellt, daß die Pellets ca. 70 % des zur Reduktion der eisen-, zink- und bleihaltigen Verbindungen erforderlichen Kohlenstoffs enthalten. Die Feuchte liegt bei 10 - 12 %. Diese Pellets werden mit grobkörnigen Kohlenstoffträgern mit einer Korngrößen von ungefähr < 10 mm versetzt. Insgesamt beträgt der Kohlenstoffanteil ca. 75% des zur Reduktion der eisen-, zink- und bleihaltigen Verbindungen erforderlichen Kohlenstoffs.

Diese selbstgängigen Pellets werden, zusammen mit den grobkörnigen Kohlenstoffträgern, in einem Wälzofen von 38,5 m Länge und 2,5 m Innendurchmesser mit einer Neigung von 3 % verarbeitet. Durch den Ofenkopf wird eine Blaslanze geführt, mit der auf 2 m Länge über Düsen Luft auf die Schlacke geblasen wird. Diese Luftmenge wird so geregelt, daß in der Schlacke enthaltenes Eisen überwiegend oxidiert wird, der Restkohlenstoff < 1 % beträgt und die Schlacketemperatur bei 1100 °C liegt. Die Gesamtluftmenge wird so geregelt, daß ein stöchiometrisches Verhältnis zu allen zu oxidierenden Gaskomponenten besteht und das Abgas kein CO enthält.

Die Schlacke wird granuliert und ist auf Grund ihrer bauphysikalischen Eigenschaften und ihrer Eluatqualität im Bauwesen verwendbar, beispielsweise für Asphalttragschichten oder zur Bildung gasgängiger Schichten in der Deponiesanierung. Der Gehalt an metallischem Eisen in der Schlacke beträgt ca. 5 Gew.-%.

Das Abgas wird in der Staubkammer grob gereinigt. Bei der anschließenden Abgaskühlung und -reinigung wird ein Wälzoxid mit einem Zinkgehalt von ca. 63 % gewonnen.

## Patentansprüche

1. Verfahren zur Verwertung von Eisen, Zink und Blei enthaltenden Sekundärrohstoffen, vorzugsweise Stahlwerkstäuben, in einem Drehrohrofen mit Gegenstrombetriebsweise von Beschickung und Gasatmosphäre sowie basisch eingestellter Wälzschlacke, wobei die Rohstoffe mit einem reaktionsfähigen, feinkörnigen Kohlenstoffträger gemischt und/oder agglomeriert werden, **dadurch gekennzeichnet, dass** der Mengenanteil des Kohlenstoffs im Vergleich mit allen kohlenstoffverbrauchenden Reaktionen in der Beschickung stark unterstöchiometrisch vorhanden ist, dass ein weiterer Anteil an grobkörnigen Kohlenstoffträgern zwischen den Agglomeraten verteilt wird, dass der Gesamtanteil des Kohlenstoffs weniger als 80 % der Menge beträgt, die alle kohlenstoffverbrauchenden Reaktionen in der Beschickung bei einer Wälztemperatur von weniger als 1150 °C benötigen, dass die Wälzschlacke in Ofenaustragsnähe nach dem Erreichen eines stabilen Ofengangs mit kalter Luft in einer Menge beaufschlagt wird, die den Anteil an metallischem Eisen am Gesamteisengehalt auf weniger als 20 % senkt, und dass dem Ofen eine Gesamtluftmenge zugeführt wird, die in Bezug auf alle oxidierbaren Gasbestandteile stöchiometrisch oder überstöchiometrisch ist, also ohne kontrollierte Nachverbrennung auskommt.

2. Verfahren nach Anspruch 1,
**dadurch gekennzeichnet, dass** der Kohlenstoffanteil so bemessen ist, dass die Wälzschlacke auch ohne Nachoxidation keinen freien Kohlenstoff enthält (< 1%).

3. Verfahren nach Anspruch 1 oder 2,
**dadurch gekennzeichnet, dass** die Wälzschlacke in Ofenaustragsnähe nach dem Erreichen eines stabilen Ofengangs mit kalter Luft in einer Menge beaufschlagt wird, die den Anteil an metallischem Eise am Gesamteiseninhalt auf weniger als 10 % senkt.

4. Verfahren nach einem oder mehreren der Ansprüche 1 bis 3,
**dadurch gekennzeichnet, dass** eine hohe Basizität der Wälzschlacke durch Zusatz von kalk- und magnesiumhaltigen Abfällen, wie Gipsfällschlamm, mit hohem Magnesiumanteil von MgO ≥ 0,1 % CaO eingestellt wird.

## Claims

1. A method of utilizing secondary raw materials containing iron, zinc and lead, preferably steelmaking dusts, in a rotary tubular furnace operating on the counterflow principle in view of burden and gas atmosphere, with basically adjusted rolling slag,
wherein said raw materials are mixed and/or agglomerated with a reactive fine-grained carbon carrier, **characterized in that** the quantitative portion of the carbon being strongly substoichiometric in commparison to all carbon-consuming reactions in the burden, wherein an additional portion of coarse-grained carbon carriers is distributed between the agglomerates, and wherein the total portion of the carbon is less than 80% of the quantity required by all carbon-consuming reactions in the burden at a rolling temperature of less than 1150°C,
wherein said rolling slag is supplied with cold air in the proximity of the furnace outlet upon reaching a stable run of the furnace in an amount reducing the portion of metallic iron of the total iron content to less than 20%, and
wherein a total air volume is supplied to the furnace, which is stoichiometric or hyperstoichiometric, respectively, in view of all oxidizable gas constituents, i.e. it can do without a special controlled subsequent combustion.

2. A method according to claim 1,
wherein said carbon portion is dimensioned such that the rolling slag does not contain free carbon (< 1%) even without subsequent oxidation.

3. A method according to one or more of claims 1 or 3,
wherein said rolling slag is supplied with cold air in the proximity of the furnace outlet upon reaching a stable run of the furnace in an amount reducing the portion of metallic iron of the total iron content to less than 20%, preferably to less than 10%.

4. A method according to one or more of claims 1 to 3,
wherein a high degree of basicity of the rolling slag is adjusted with a high portion of magnesium with MgO ≥ 0.1% CaO by adding lime and magnesium containing wastes, such as plaster precipitation sludge.

## Revendications

1. Procédé de valorisation de matières premières secondaires contenant du fer, du zinc et du plomb, de préférence des poussières métallurgiques, dans un four rotatif avec mode de fonctionnement à contre-courant de la charge et de l'atmosphère gazeuse ainsi que des scories de laminoir basiques, où les matières premières sont mélangées et/ou agglomérées à un support de carbone finement divisé, réactif, **caractérisé en ce que** la proportion de carbone est présente de manière fortement sous-stoechiométrique par comparaison à toutes les réactions utilisant du carbone, dans la charge, **en ce qu'**une autre proportion de support de carbone à grains grossiers est distribuée entre les agglomérats, **en ce que** la proportion totale du carbone s'élève à moins de 80% de la quantité que nécessitent toutes les réactions utilisant du carbone dans la charge, à une température de laminoir inférieure à 1150°C, **en ce que** les scories de laminoir sont munies au voisinage de la sortie du four, après avoir atteint un service de four stable, d'air froid en une quantité qui diminue la proportion de fer métallique par rapport à la teneur totale en fer, à moins de 20%, et **en ce que** l'on amène dans le four, une quantité totale d'air qui est stoechiométrique ou sous-stoechiométrique concernant tous les constituants gazeux oxydables, sans qu'une post-combustion contrôlée se produise.

2. Procédé selon la revendication 1, **caractérisé en ce que** la proportion de carbone est mesurée de sorte que les scories de laminoir ne contiennent pas de carbone libre, sans oxydation ultérieure (< 1%).

3. Procédé selon la revendication 1 ou 2, **caractérisé en ce que** les scories de laminoir sont munies au voisinage de la sortie du four, après avoir atteint un service de four stable, d'air froid en une quantité qui diminue la proportion de fer métallique par rapport à la teneur totale en fer, à moins de 10%.

4. Procédé selon l'une ou plusieurs des revendications 1 à 3, **caractérisé en ce que** l'on ajuste une basicité élevée des scories de laminoir par addition de résidus contenant de la chaux ou du magnésium, comme la boue de précipitation du plâtre, du CaO avec une proportion élevée en magnésium de MgO ≥ 0,1 %.
